# EUROPÄISCHE PATENTSCHRIFT

(11) **EP 3 869 645 B1**
(45) Veröffentlichungstag und Bekanntmachung des Hinweises auf die Patenterteilung: **03.04.2024**
(21) Anmeldenummer: 21157696.2
(22) Anmeldetag: 17.02.2021
(51) Int. Cl.: H01T 4/06, H01H 9/28, H02B 1/21, H01T 4/04, H02H 7/22, H02H 9/06

(54) **MANIPULATIONSSCHUTZ-ABDECKUNG EINES ÜBERSPANNUNGSSCHUTZGERÄTS ZUR INSTALLATION AN EINEM SAMMELSCHIENENSYSTEM**
TAMPER-PROOF COVER OF AN OVERVOLTAGE PROTECTION DEVICE FOR INSTALLATION ON A BUS BAR SYSTEM
COUVERCLE DE PROTECTION CONTRE LA MANIPULATION D'UN APPAREIL DE PROTECTION CONTRE LES SURTENSIONS DESTINÉ À L'INSTALLATION SUR UN SYSTÈME DE BARRE OMNIBUS

(30) Priorität: 19.02.2020 DE 102020104412; 17.03.2020 DE 202020101558 U; 17.03.2020 DE 102020107331
(43) Veröffentlichungstag der Anmeldung: 25.08.2021
(73) Patentinhaber: DEHN SE, 92318 Neumarkt i.d. OPf. (DE)
(72) Erfinder: HIERL, Stephan, 92318 Neumarkt (DE); BROCKE, Ralph, 92318 Neumarkt (DE); KRAUSS, Bernhard, 92318 Neumarkt (DE); SPANGLER, Patrick, 92318 Neumarkt (DE); MOROSHEK, Michael, 92318 Neumarkt (DE)
(74) Vertreter: Prinz & Partner mbB

(56) Entgegenhaltungen:
- DE-U- 7 207 930
- DE-U1- 20 121 544
- DE-U1-202018 006 111
- DE-U1-202019 103 321

## Beschreibung

Die Erfindung betrifft eine Manipulationsschutz-Abdeckung eines Überspannungsschutzgeräts zur Installation an einem Sammelschienensystem.

Aus dem deutschen Gebrauchsmuster DE 20 2019 103 321 U1 ist ein Überspannungsschutzgerät zur Installation an einem Sammelschienensystem bekannt. Gemäß der dortigen Lösung soll ein für eine Spannungsversorgung von Smart-Meter-Gateways notwendiger Spannungsabgriff in das Überspannungsschutzgerät integriert werden. Damit soll auf eine separate Komponente für die Spannungsversorgung verzichtet werden können, wodurch Platz im Vorzählerbereich eingespart wird.

Das vorbekannte Überspannungsschutzgerät weist ein Gehäuse auf, an dessen Rückseite ein Kupplungsbereich zur mechanischen und elektrischen Kontaktierung einer Sammelschiene angeordnet ist. Der Kupplungsbereich besitzt Kupplungsmittel, die in einem Rasterabstand eines Sammelschienensystems angeordnet sind und in an sich bekannter Weise eine unmittelbare Montage auf dem Sammelschienensystem zur mechanischen und elektrischen Verbindung mit den Leiterschienen ermöglichen.

Die Kupplungsmittel sind beispielsweise so ausgebildet, dass sie ein unmittelbares mechanisches Verrasten des Überspannungsschutzgerätes auf das Sammelschienensystem ermöglichen und dabei gleichzeitig eine elektrische Kontaktierung der Leiterschienen herstellen, wie es beispielsweise in der DE 20 2004 011 908 U1 offenbart ist.

Im Inneren des Gehäuses sind mehrere elektrisch verdrahtete Überspannungsableiter, insbesondere Funkenstrecken, befindlich. Das Überspannungsschutzgerät ist als Konfiguration eines Kombi-Ableiters mit mehreren integrierten und elektrisch verdrahteten Überspannungsableitern ausgebildet. Derartige Überspannungsableiter, zum Beispiel ausgebildet als Kombi-Ableiter für Hauptstromversorgungssysteme gehören zum Stand der Technik. Ableiter der vorstehend geschilderten Art werden unter dem Markennamen "DEHNventil ZP" vertrieben und sind speziell für ein Sammelschienenanschlussfeld eines Zählerplatzes ausgelegt.

Die DE 20 2019 103 321 U1 zeigt in einer Weiterbildung ein Überspannungsschutzgerät mit einer angrenzend angeordneten Einspeiseschiene, die in eine Aussparung des Gehäuses hineinragt, so dass der zur Verfügung stehende Raum zum Beispiel im Hausanschlussbereich optimal ausgenutzt werden kann. Grundsätzlich ist es so, dass Niederspannungsschutzkomponenten wie Leitungsschutzschalter, Schmelzsicherungen, Einspeiseeinrichtungen aber auch Überspannungsableiter sich einen beschränkten Bauraum in Anschlusskästen teilen müssen.

Die DE 72 07 930 U beschreibt eine Schaltsperre für ein Betätigungsorgan eines Sicherungsautomaten, wobei das Betätigungsorgan durch eine Kappe mit angeformten federnden Nocken abgedeckt ist, wobei die Nocken in Vertiefungen im Gehäuse des Sicherungsautomaten einrasten.

Die DE 20 2018 006 111 U1 beschreibt ein Überspannungsschutzgerät mit einem seitlichen Aufnahmebereich für eine elektrotechnische Komponente wie etwa einem Leitungsschutzschalter.

Da der Platz im Anschlussraum nicht größer wird, jedoch immer mehr Geräte im Niederspannungs-Installationsumfeld verbaut werden sollen und müssen, gestaltet sich die Montage und auch die Verdrahtung der erforderlichen Komponenten für den Installateur in der Praxis außerordentlich schwierig und zeitaufwändig.

Aus dem Vorgenannten ist es daher Aufgabe der Erfindung, eine manipulationssichere Installation einer elektrischen Komponente in platzsparender Weise im Bereich des Anschlussraums zu gewährleisten.

Die Lösung der Aufgabe der Erfindung erfolgt mit einer Manipulationsschutz-Abdeckung für ein Überspannungsschutzgerät zur Installation an einem Sammelschienensystem gemäß der Lehre des Anspruches 1, wobei die Unteransprüche mindestens zweckmäßige Ausgestaltungen und Weiterbildungen darstellen.

Ferner wird die Aufgabe erfindungsgemäß gelöst durch eine Baugruppe umfassend ein Überspannungsschutzgerät sowie eine Manipulationsschutz-Abdeckung.

Es wird demnach von einer Manipulationsschutz-Abdeckung eines Überspannungsschutzgeräts zur Installation an einem Sammelschienensystem ausgegangen, wobei die Manipulationsschutz-Abdeckung einen Grundkörper aufweist, der einen Aufnahmeteilraum für einen Schaltbetätigungshebel einer vom Überspannungsschutzgerät aufgenommenen elektrischen Komponente definiert. Die Manipulationsschutz-Abdeckung weist einen seitlichen Vorbau auf, der auch als Ausstellung bezeichnet werden kann. Der seitliche Vorbau ist über wenigstens eine Sollbruchstelle mit dem Grundkörper trennbar verbunden. Der seitliche Vorbau definiert einen Zusatzraum, der zusammen mit dem Aufnahmeteilraum des Grundkörpers einen gemeinsamen Aufnahmeraum für den Schaltbetätigungshebel definiert, der größer ist als der durch den Grundkörper definierten Aufnahmeteilraum.

Grundsätzlich kann das Überspannungsschutzgerät ein Gehäuse mit einem bodenseitigen Kupplungsbereich zum mechanischen und elektrischen Kontaktieren an Sammelschienen aufweisen.

Im Gehäuse können Überspannungsableiter zum Schutz von dem jeweiligen Niederspannungsversorgungssystem enthalten sein. Die einzelnen Überspannungsableiter sind beispielsweise in an sich bekannter Weise innerhalb des Gehäuses elektrisch verschalten. Das Gehäuse kann einen Gehäuserücksprung aufweisen, welcher an einer Gehäuselängsseite ausgebildet ist und sich im Wesentlichen senkrecht zum Sammelschienensystem sowie im Bereich eines Gehäusedomes erstreckt.

Im Gehäuserücksprung ist beispielsweise eine elektrische Komponente anordenbar.

Der Gehäuserücksprung kann dabei so ausgeführt sein, dass die elektrische Komponente nun nicht nur teilweise in den Rücksprungbereich hinein taucht, sondern von Mitteln im Gehäuserücksprung fixierbar ist.

Im Gehäuse können, dem Gehäusedom benachbart, und an den Gehäuserücksprung heranreichend, Anschlussklemmen ausgebildet sein, welche eine elektrische Kontaktierung der elektrischen Komponente ermöglichen. Dabei sind diese Anschlussklemmen von oben zugänglich, so dass nach dem Einsetzen der elektrischen Komponente in den Gehäuserücksprung in einfacher Weise die notwendige elektrische Verbindung zwischen der elektrischen Komponente und dem Überspannungsgerät herstellbar ist, das diesbezüglich schaltungstechnisch ausgestattet wird.

An der zum Gehäuserücksprung weisenden Seite des Gehäuses können, von der Domoberseite zugängliche, das heißt offene, Nuten vorgesehen sein, um die Manipulationsschutz-Abdeckung für die im Gehäuserücksprung angeordnete elektrische Komponente zu fixieren. Sofern die elektrische Komponente nicht eingesetzt ist, kann auch eine Blindkomponente eingesetzt sein, welche den Gehäuserücksprung ausfüllt.

Durch die entsprechend ausgebildete Manipulationsschutz-Abdeckung ist sichergestellt, dass die im Überspannungsschutzgerät eingesetzte elektrische Komponente manipulationssicher und platzsparend aufgenommen ist, da ein Zugang zum Schaltbetätigungshebel der elektrischen Komponente durch die Manipulationsschutz-Abdeckung verhindert ist. Hierzu ist die Manipulationsschutz-Abdeckung hauben- bzw. kappenförmig ausgebildet, da die Manipulationsschutz-Abdeckung einen Grundkörper aufweist, der einen Aufnahmeteilraum für den Schaltbetätigungshebel definiert, sodass dieser zumindest vom Grundkörper entsprechend aufgenommen ist.

Zudem umfasst die Manipulationsschutz-Abdeckung den seitlichen Vorbau, der seitlich vom Grundkörper absteht, wodurch die Breite der Manipulationsschutz-Abdeckung entsprechend vergrößert ist. Da der seitliche Vorbau über die wenigstens eine Sollbruchstelle mit dem Grundkörper verbunden ist, ist eine flexible Anpassung der Breite der Manipulationsschutz-Abdeckung möglich, insbesondere an unterschiedliche Größen der elektrischen Komponenten bzw. der Schaltbetätigungshebel der elektrischen Komponenten. Der seitliche Vorbau definiert den Zusatzraum, der zusammen mit dem Aufnahmeteilraum des Grundkörpers den entsprechend größeren Aufnahmeraum der Manipulationsschutz-Abdeckung definiert, der für breite elektrische Komponenten bzw. breite Schaltbetätigungshebel genutzt werden kann.

Ein Aspekt sieht vor, dass die Manipulationsschutz-Abdeckung einen ersten Zustand, in dem der seitliche Vorbau den Aufnahmeraum seitlich abschließt, und einen zweiten Zustand aufweist, in dem der Aufnahmeteilraum im Bereich der Sollbruchstelle seitlich offen ist. Im ersten Zustand ist der seitliche Vorbau mit dem Grundkörper verbunden, sodass der entsprechend breitere bzw. größere Aufnahmeraum vorliegt, der zur Aufnahme der breiten elektrischen Komponente bzw. des breiten Schaltbetätigungshebels genutzt werden kann. Ein seitlicher Eingriff in den Aufnahmeraum wird dabei aufgrund der Ausgestaltung des seitlichen Vorbaus wirkungsvoll verhindert. Im zweiten Zustand ist der seitliche Vorbau dagegen vom Grundkörper getrennt worden, sodass die Breite der Manipulationsschutz-Abdeckung entsprechend reduziert ist. Hierdurch ergibt sich eine offene Seite der Manipulationsschutz-Abdeckung, die im installierten Zustand aber von einem benachbarten Überspannungsschutzgerät bzw. einem Sicherungshauptschalter verdeckt wird, sodass die Manipulationssicherheit gewährleistet ist. Um den zweiten Zustand zu erreichen, kann der seitliche Vorbau über die wenigstens eine Sollbruchstelle abgeschnitten oder abgebrochen werden.

In beiden Zuständen ist somit der Berührungsschutz und auch die Manipulationssicherheit sichergestellt.

Aufgrund der beiden Zustände der Manipulationsschutz-Abdeckung ist ein flexibler Einsatz möglich, da die Manipulationsschutz-Abdeckung hinsichtlich ihrer Breite angepasst werden kann.

Insofern kann der seitliche Vorbau eine Seitenwand aufweisen, die auf der vom Grundkörper abgewandten Seite des seitlichen Vorbaus vorgesehen ist. Die Seitenwand stellt den seitlichen Abschluss und somit die Manipulationssicherheit im ersten Zustand der Manipulationsschutz-Abdeckung sicher.

Ein weiterer Aspekt sieht vor, dass die wenigstens eine Sollbruchstelle eine definiert veränderliche Breite der Manipulationsschutz-Abdeckung sicherstellt. Insofern lässt sich die Manipulationsschutz-Abdeckung für unterschiedliche, definierte Einsatzzwecke verwenden, da der seitliche Vorsprung über die wenigstens eine Sollbruchstelle abtrennbar ist.

Insbesondere hat der seitliche Vorbau eine Breite von 1 Teilungseinheit (TE). Der seitliche Vorbau hat demnach eine Breite von 18 mm. Hierdurch ergibt sich eine entsprechend Anpassung der Manipulationsschutz-Abdeckung an da gesamte System, insbesondere an die Gegebenheiten im Bauraum.

Ein weiterer Aspekt sieht vor, dass der seitliche Vorbau eine rechteckige Form hat. Somit entspricht die Form des seitlichen Vorbaus den Geometrien am Einsatzort.

Aufgrund der entsprechenden Geometrie des seitlichen Vorbaus, also Form und/oder Maße, ist sichergestellt, dass in beiden Zuständen der Manipulationsschutz-Abdeckung keine Spalte bzw. Lücken entstehen.

Gemäß einem weiteren Aspekt, hat der seitliche Vorbau eine Tiefe, die im Vergleich zur Tiefe des Grundkörpers verlängert ist. Insofern ragt der seitliche Vorbau tiefer in den vorhandenen Bauraum hinein, beispielsweise in einen Schaltschrank. Hierdurch ist wirkungsvoll verhindert, dass tiefer konstruierte Verteilerabdeckungen den Berührungsschutz unterlaufen.

Insbesondere kann der seitliche Vorbau eine quer verlaufende Sollbruchstelle aufweisen, über die die Tiefe des seitlichen Vorbaus einstellbar ist, insbesondere an den zur Verfügung stehenden Bauraum. Die quer verlaufende Sollbruchstelle verläuft insbesondere senkrecht zur Sollbruchstelle zwischen dem seitlichen Vorbau und dem Grundkörper.

Die Manipulationsschutz-Abdeckung, insbesondere der Grundkörper, kann wenigstens eine Schiene aufweisen, beispielsweise zu den Nuten komplementäre Schienen. Über die Schiene ist die Manipulationsschutz-Abdeckung am Überspannungsschutzgerät einsetzbar, insbesondere wobei die Schiene an einer zum seitlichen Vorbau entgegengesetzten Seite des Grundkörpers vorgesehen ist. Insofern kann die Manipulationsschutz-Abdeckung entsprechend am Überspannungsschutzgerät eingesetzt werden, um dort fixiert zu werden.

Dabei kann die Schiene im Querschnitt eine T-Form haben, so dass eine eindeutige Lagezuordnung gesichert und ein nicht korrektes Einsetzen der Manipulationsschutz-Abdeckung verhindert ist.

Zudem kann die Manipulationsschutz-Abdeckung zumindest einen Teil einer Verrastung aufweisen, insbesondere eine Rastnase oder einen Rastrücksprung. Hierüber kann die Manipulationsschutz-Abdeckung mit dem Überspannungsschutzgerät interagieren, sodass die Manipulationsschutz-Abdeckung im montierten Zustand eingerastet ist. Bei dem Teil der Verrastung kann es sich um eine Rastnase oder einen Rastrücksprung handeln. Das Überspannungsschutzgerät weist dann die entsprechende Gegenkomponente der Verrastung auf.

Es kann also zwischen dem Gehäusedom und der Manipulationsschutz-Abdeckung eine Verrastung realisiert sein, beispielsweise mit Hilfe einer Rastnase, die in einem zugehörigen, komplementären Rastrücksprung eingreift.

Hierdurch ist die Manipulationsschutz-Abdeckung sicher gehalten.

Die erwähnten Anschlussklemmen für die einsetzbare elektrische Komponente sind bevorzugt als Schiebeklemmen mit Kontaktstück realisiert. Zu diesem Zweck ist im Gehäuse des Überspannungsschutzgerätes eine Langlochausnehmung vorhanden, um mit Hilfe eines Werkzeuges die Schiebeklemmen in Richtung einer diesbezüglichen Kontaktöffnung in der elektrischen Komponente zu bewegen.

Bei der Blindkomponente sind geschlossene, gegenüberliegende Schmalseiten vorhanden, um Fehlbedienungen der Schiebeklemmen zu verhindern. Mit anderen Worten ist es beim Einsetzen einer Blindkomponente nicht möglich, die Schiebeklemmen in Richtung Blindkomponente zu bewegen.

Die Schmalseiten der Blindkomponente weisen weiterhin über ihre Längserstreckung eine Profilierung auf, die zu einer komplementären Profilierung im Gehäuserücksprung passend ausgestaltet ist, so dass lediglich ein Einschieben der Blindkomponente von oben, nicht jedoch ein Kippen der Blindkomponente oder seitliches Herausdrücken dieser erfolgen kann.

Weiterhin können die Seitenwände der Blindkomponente jeweils nach unten sich erstreckende Verlängerungen aufweisen, die zungenartig in Öffnungen, das heißt schlitzförmige Aussparungen im Boden des Gehäuserücksprunges des Überspannungsableiters eintauchen. Auch dies führt zu einer verbesserten seitlichen Stabilisierung und zu einem erhöhten Manipulationsschutz.

Ferner kann die Manipulationsschutz-Abdeckung eine Plombierungsfläche aufweisen. Die Plombierungsfläche entspricht einer Fläche zur Aufnahme einer Plombierung, sodass eine Manipulation der elektrischen Komponente nur durch Zerstören der Plombe möglich ist, da dies nötig ist, um die Manipulationsschutz-Abdeckung abzunehmen und Zugang zur elektrischen Komponente zu erhalten.

Auch am Gehäusedom kann eine Fläche zur Aufnahme einer Plombierung vorhanden sein, die mit der Plombierungsfläche der Manipulationsschutz-Abdeckung zusammenwirkt.

Die Plombierungsfläche kann einen stegartigen Vorsprung umfassen, welcher eine Öffnung zur Aufnahme einer Plombierung aufweist, beispielsweise eines Plombierdrahtes bzw. einer Plombierschnur zum Zweck des Verplombens.

Die Manipulationsschutz-Abdeckung weist grundsätzlich eine Kappenform auf, wobei die Kappe an der dem Dom abgewandten Seite ausgestellt ist. Die Ausstellung entspricht dem seitlichen Vorsprung.

Diese Ausstellung der Kappe kann eine Kotflügel-Bogenform besitzen. Durch die Ausstellung der Seitenwand bzw. den seitlichen Vorsprung können, wie zuvor erwähnt, elektrische Komponente umgriffen werden, die über eine größere Breite verfügen oder bei denen von oben zugängliche Betätigungsmechanismen, zum Beispiel in Form eines Betätigungshebels für einen Leitungsschalter, entsprechende Abmessungen aufweisen.

Es besteht darüber hinaus die Möglichkeit, dass zwischen der Ausstellung und der umgebenden Kappenwandung eine Perforation zum Heraus- oder Abtrennen vorgesehen ist. Insofern kann die wenigstens eine Sollbruchstelle durch eine Perforation hergestellt sein.

Die Manipulationsschutz-Abdeckung kann aus einem transparenten, beispielsweise einem durchsichtigen oder durchscheinenden, Material hergestellt sein, insbesondere einem entsprechenden Kunststoffmaterial. Hierdurch ist sichergestellt, dass bei einer Installation im netzseitigen Anschlussraum jederzeit erkannt werden kann, in welchem Zustand sich die darunter befindliche elektrische Komponente befindet. Beispielsweise kann eine Schaltstellung eines Leitungsschalters erkannt werden, ohne dass, wie bisher üblich, undurchsichtige Abdeckstreifen im netzseitigen Anschlussraum oder eine gesamte diesbezügliche undurchsichtige Abdeckung entfernt werden muss.

Wie bereits erwähnt, ist die elektrische Komponente bevorzugt ein Leitungsschutzschalter mit Schaltbetätigungshebel, welcher in einer bekannten Bauform ausgeführt ist.

In weiterer Ausgestaltung weist der Boden des Gehäuserücksprunges eine hutschienenähnliche Struktur zur Aufnahme einer diesbezüglich ausgebildeten und geeigneten elektrischen Komponente auf. Der Vorteil dieser Ausgestaltung liegt insbesondere darin, dass quasi Standard-Leitungsschalter für Hutschienenmontage in den Gehäuserücksprung eingesetzt werden können.

Mit dem Einsetzen einer Blindkomponente in den Gehäuserücksprung wird nicht nur für ein geschlossenes Gesamterscheinungsbild des Überspannungsschutzgerätes gesorgt, sondern ein Berührungsschutz erreicht, auch in dem Falle, dass im netzseitigen Anschlussraum ein entsprechender Deckel eines Anschlusskastens entfernt wird. Es erhöht sich hierdurch die Sicherheit beim Hantieren und insbesondere bei Mess- und Prüfarbeiten unter Spannung.

Grundsätzlich kann das Überspannungsschutzgerät ein Gehäuse mit einem Gehäuserücksprung aufweisen, welcher an einer Gehäuselängsseite ausgebildet ist und sich im Wesentlichen senkrecht zum Sammelschienensystem sowie im Bereich eines Gehäusedomes erstreckt. Die Manipulationsschutz-Abdeckung ist dem Gehäuserücksprung zugeordnet. Insofern kann die Manipulationsschutz-Abdeckung am Überspannungsschutzgerät angeordnet sein, um die vom Überspannungsschutzgerät aufgenommene elektrische Komponente vor einer Manipulation zu schützen.

Es kann also der offene Bereich einer Abdeckung im netzseitigen Anschlussraum anstelle undurchsichtiger Abdeckstreifen durch eine bevorzugt durchsichtige Manipulationsschutz-Abdeckung verschlossen werden. Hierdurch ist die Möglichkeit geschaffen, den Schaltzustand einer unterhalb der Abdeckung befindlichen Komponente zu erkennen. Weiterhin kann die Abdeckung entfernt werden, ohne dass eine Öffnung des Korpus im netzseitigen Anschlussraum erforderlich ist. Durch die Variante mit Plombierung erhalten nur berechtigte Personen Zugang.

Die Blindkomponente ist insofern eine Abdeckung des ausgebildeten Gehäuserücksprunges, die eine Nachrüstung einer elektrischen Komponente ermöglicht, aber auch bis zu diesem Zeitpunkt den notwendigen Berührungsschutz und die erforderliche Manipulationssicherheit gewährleistet.

Die Erfindung soll nachstehend anhand von Figuren und von Ausführungsbeispielen näher erläutert werden.

Hierbei zeigen:
Fig. 1 eine perspektivische Darstellung mit Blick in einen netzseitigen Anschlussraum, dort erkennbaren Sammelschienensystem nebst auf den Sammelschienen aufgestecktem Überspannungsschutzgerät, welches einen Gehäuserücksprung aufweist, und wobei im Gehäuserücksprung ein Leitungsschalter eingesetzt ist sowie mit einer Manipulationsschutz-Abdeckung aus einem durchsichtigen Kunststoffmaterial;
Fig. 2 und 3 verschiedene Ansichten der Manipulationsschutz-Abdeckung mit Plombiermöglichkeit, Ausstellung in Form eines Kotflügels sowie angedeuteter Verrastung und einer T-Nuten-Führung für eine exakte Positionierung der Abdeckung im Dombereich des Überspannungsschutzgerätes, wie in Fig. 1 erkennbar;
Fig. 4 eine Darstellung ähnlich derjenigen nach Fig. 1 mit Ansicht eines netzseitigen Anschlussraumes, Sammelschienensystem, Überspannungsschutzgerät und einer Blindkomponente, welche noch nicht vollständig in den Bereich des Gehäuserücksprunges eingesteckt ist, und wobei eine Schulter oder ein Absatz der Blindkomponente als Ziehschutz bei montierter Anschlussraumabdeckung dient sowie Zungen an der Blindkomponente, welche in den Boden des Gehäuserücksprunges des Überspannungsschutzgerätes eintauchen, um eine seitliche mechanische Stabilisierung zu bewirken;
Fig. 5 eine Darstellung ähnlich derjenigen wie in Fig. 4, jedoch mit vollständig eingeschobener Blindkomponente, wobei im Bereich der weggebrochenen Detaildarstellung gezeigt ist, dass ohne Seitenwände in der Blindkomponente Fehlbedienungen durch Schiebeklemmen im Überspannungsschutzgerät möglich wären, was durch geschlossene Seitenwände, wie in den Fig. 6 und 7 ersichtlich, verhinderbar ist;
Fig. 6 und 7 verschiedene perspektivische Darstellungen der Blindkomponente mit T-Nuten-Führung, Verrastung, Ziehschutz-Schulter, Plombiermöglichkeit, Seitenwänden mit Strukturierung und den bereits erwähnten Zungen;
Fig. 8 eine perspektivische Darstellung des Überspannungsschutzgerätes mit von der Domoberseite zugänglichen Nuten zum Einschieben der Abdeckung oder Blindkomponente;
Fig. 9 eine perspektivische Darstellung einer Manipulationsschutz-Abdeckung gemäß einer zweiten Ausführungsform;
Fig. 10 eine schematische Darstellung, die die Installation der Manipulationsschutz-Abdeckung aus Figur 9 in einem ersten Zustand verdeutlicht;
Fig. 11 eine schematische Darstellung, die die Installation der Manipulationsschutz-Abdeckung aus Figur 9 in einem zweiten Zustand verdeutlicht; und
Fig. 12 eine perspektivische Darstellung einer Manipulationsschutz-Abdeckung gemäß einer weiteren Ausführungsform.

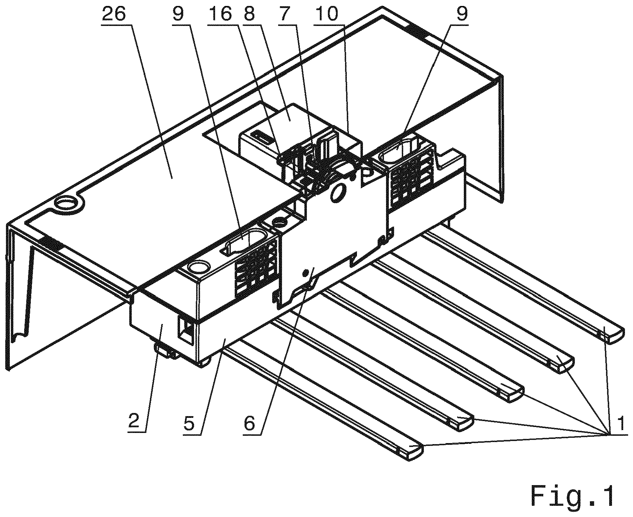

In den dargestellten Figuren wird von einem Überspannungsschutzgerät zur Installation an einem Sammelschienensystem ausgegangen, wobei das Sammelschienensystem aus den in den Figuren 1, 4 und 5 gezeigten mehreren, parallel in einem Rasterabstand verlaufenden Sammelschienen 1 besteht.

Das Überspannungsschutzgerät weist ein Gehäuse 2 mit einem bodenseitigen Kupplungsbereich 3 zum mechanischen und elektrischen Kontaktieren an den Sammelschienen 1 auf.

Im Inneren des Gehäuses 2 befinden sich je nach Ausführungsform des Überspannungsschutzgerätes mehrere Überspannungsableiter zum Schutz von Niederspannungsversorgungssystemen. Diese Überspannungsableiter sind innerhalb des Gehäuses 2 elektrisch verschalten.

Weiterhin ist ein Gehäuserücksprung 4 vorhanden, welcher an einer Gehäuselängsseite 5 ausgebildet ist und sich im Wesentlichen senkrecht zum Sammelschienensystem 1 erstreckt.

Im Gehäuserücksprung 4 ist eine elektrische Komponente angeordnet. Beim gezeigten Beispiel nach Figur 1 handelt es sich hier um einen Leistungsschutzschalter 6 mit einem Schaltbetätigungshebel 7.

Der Gehäuserücksprung 4 erstreckt sich bis in den Bereich eines Gehäusedomes 8.

Im Gehäuse 2, dem Gehäusedom 8 benachbart und an den Gehäuserücksprung 4 heranreichend sind Anschlussklemmen ausgebildet, die sich im Bereich der Langlochausnehmungen 9 befinden.

Diese Anschlussklemmen ermöglichen eine elektrische Kontaktierung der elektrischen Komponente, zum Beispiel des dargestellten Leitungsschutzschalters 6.

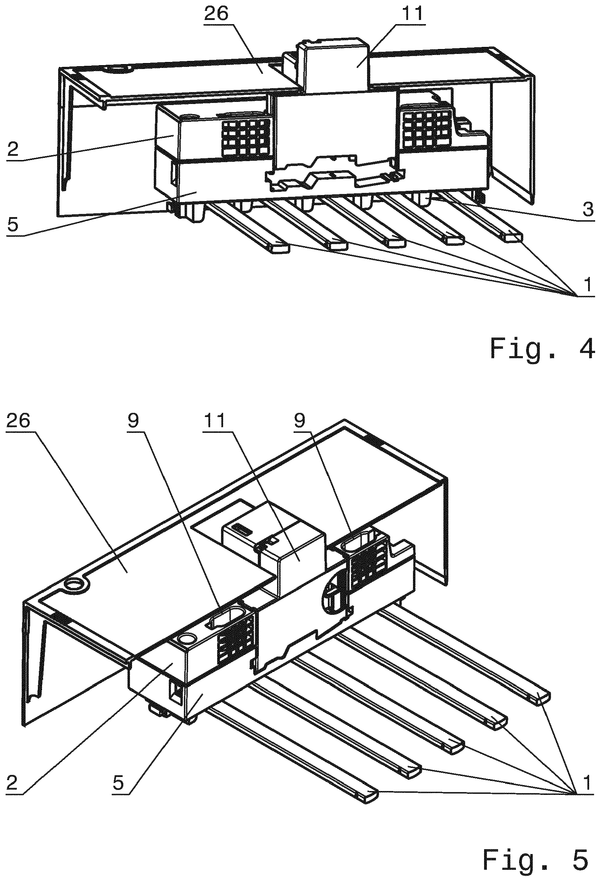

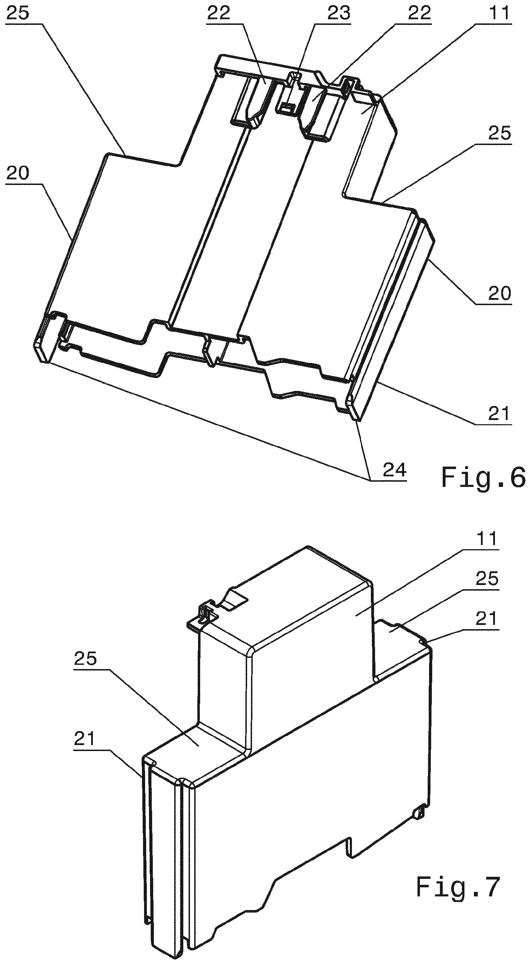

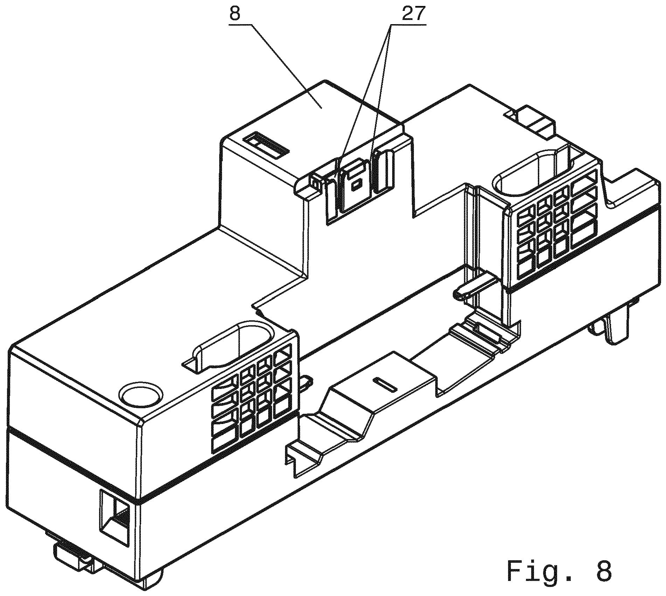

An der zum Gehäuserücksprung 4 weisenden Seite des Gehäuses 2 sind von der Oberseite des Gehäusedomes 8 zugängliche Nuten 27 (siehe Figur 8) vorgesehen, um eine Manipulationsschutz-Abdeckung 10 für die im Gehäuserücksprung 4 angeordnete elektrische Komponente 6 oder aber auch eine Blindkomponente 11 (Figur 4 bis 7), wobei letztere den Gehäuserücksprung 4 ausfüllt, zu fixieren.

Das Überspannungsschutzgerät bildet mit der Manipulationsschutz-Abdeckung 10 eine Baugruppe aus.

Wie vorstehend und nachfolgend detailliert beschrieben, kann am Überspannungsschutzgerät die Manipulationsschutz-Abdeckung 10 oder die Blindkomponente 11 angeordnet sein.

Insofern stellt das Überspannungsschutzgerät, die Manipulationsschutz-Abdeckung 10 und die Blindkomponente 11 ein Baukastensystem dar, wobei je nach Anwendung die Manipulationsschutz-Abdeckung 10 oder die Blindkomponente 11 am Überspannungsschutzgerät vorgesehen ist.

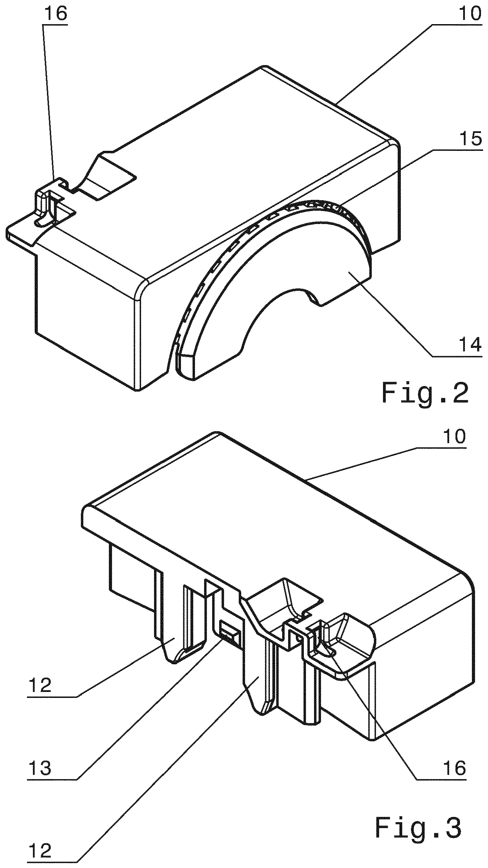

Wie aus den Darstellungen nach den Figuren 2 und 3 ersichtlich, ist die Manipulationsschutz-Abdeckung 10 hauben- bzw. kappenförmig ausgebildet. Zudem kann die Manipulationsschutz-Abdeckung 10 aus einem transparenten oder durchscheinenden Material ausgeführt sein. An der zum Gehäusedom 8 weisenden Seite sind zu den Nuten 27 im Dom komplementäre Schienen 12 vorgesehen.

Die Schienen können im Querschnitt eine T-Form besitzen.

Weiterhin ist zwischen dem Gehäusedom 8 und der Manipulationsschutz-Abdeckung 10 oder aber auch der Blindkomponente eine Verrastung 13 in Form einer Rastnase mit zugeordnetem Rastrücksprung ausgebildet.

Die Manipulationsschutz-Abdeckung 10 weist in der in den Figuren 2 und 3 gezeigten Ausführungsform an der, den Schienen 12 gegenüberliegenden Seite, das heißt der domabgewandten Seite einen seitlichen Vorbau bzw. eine Ausbauchung oder Ausstellung in Form eines Kotflügels in Bogengestalt auf.

Zwischen dieser Ausstellung 14 in Form eines Kotflügels und der umgebenden Kappenwandung kann eine Sollbruchstelle in Form einer Perforation 15 befindlich sein, um ein Heraus- oder Abtrennen der Ausstellung, also des seitlichen Vorbaus, zu ermöglichen.

Zusätzlich besteht die Möglichkeit, sowohl am Gehäusedom 8 aber auch an der Manipulationsschutz-Abdeckung 10 oder der Blindkomponente 11 Mittel oder Flächen 16 zur Aufnahme einer Plombierung auszubilden. Demnach weist die Manipulationsschutz-Abdeckung 10 eine Plombierungsfläche auf.

Wie aus den Figuren 2 und 3 hervorgeht, ist an der Plombierungsfläche ein stegartiger Vorsprung vorgesehen, welcher eine Öffnung zur Aufnahme einer Plombierung hat. Nachfolgend wird auf Details der Manipulationsschutz-Abdeckung 10 noch detaillierter eingegangen.

Mit Hilfe der Figuren 4 bis 7 ist illustriert, wie eine Blindkomponente 11 in den Gehäuserücksprung 4 des Überspannungsschutzgerätes eingesetzt werden kann.

Die geometrische Form dieser Blindkomponente ist dem Erscheinungsbild eines typischen Leitungsschutzschalters oder einer entsprechenden Sicherung nachempfunden, jedoch bevorzugt farblich diesbezüglich unterschiedlich, so dass eine Erkennung als Dummy sichergestellt ist.

Die Blindkomponente 11 weist geschlossene, gegenüberliegende Schmalseiten 20 auf, die ein Eindringen einer Schneidklemme verhindern, wie dies bei entsprechend nicht geschlossener Ausführung der Seitenwand in Figur 5 dargestellt ist.

Die Schmalseiten 20 weisen über ihre Längserstreckung eine Profilierung 21 auf, die zu einer Profilierung in der diesbezüglichen Aussparungsfläche im Überspannungsableiter, das heißt im Bereich des Gehäuserücksprunges 4, komplementär ist, so dass lediglich ein Einschieben von oben in den Gehäuserücksprung nicht jedoch ein Herauskippen oder seitliches Herausdrücken der Blindkomponente 11 erfolgen kann.

Auch an der Blindkomponente 11 befinden sich Schienen 22 sowie eine Rastnase 23, um die Blindkomponente 11 am Dom 8 und dort vorgesehenen komplementären Rücksprüngen bzw. Ausnehmungen sicher zu fixieren. Ebenso besitzt die Blindkomponente 11 Mittel 16 zum Plombieren.

Zungenartige Fortsätze 24 am unteren Ende der Blindkomponente 11 tauchen in zugehörige Ausnehmungen im Bodenbereich der Aussparung, das heißt im Gehäuserücksprung 4, ein mit dem Ergebnis einer verbesserten seitlichen mechanischen Stabilisierung.

Der Boden des Gehäusesrücksprunges 4 besitzt eine hutschienenähnliche Struktur bzw. eine dementsprechend strukturierende Oberfläche zur Aufnahme einer diesbezüglich angepasst ausgeführten elektronischen Komponente. Aber auch die Blindkomponente kann dementsprechend strukturiert sein, so dass sich ein sicherer Halt der Blindkomponente 11 im Gehäuserücksprung 4 ergibt, wenn die Abfolge der Figuren 4 und 5 betrachtet wird.

Schultern 25 an der Blindkomponente 11 dienend ergänzend als Ziehschutz bei montierter Abdeckung 26 im netzseitigen Anschlussraum.

Durch die transparente Ausbildung der Manipulationsschutz-Abdeckung 10 ist die Stellung eines Betätigungshebels eines eingesetzten Leitungsschutzschalters jederzeit erkennbar.

Die Manipulationsschutz-Abdeckung 10 kann auch bei vorhandener Abdeckung 26 entfernt und wieder aufgesetzt werden, so dass weitere diesbezügliche Demontagearbeiten nicht erforderlich werden.

Wie aus den Figuren 2 und 3 sowie 6 ersichtlich ist, können die Schienen 12 beabstandet paarweise realisiert werden und über eine Einführschräge verfügen, so dass eine exakte Positionierung und ein leichtes Aufstecken möglich sind.

Bei den gezeigten Darstellungen schließt entweder die elektrische Komponente flächenbündig mit der diesbezüglichen Längsseitenoberfläche des Überspannungsschutzgerätes oder aber auch die Blindkomponente entsprechend flächenbündig ab. Benachbarte Geräte, zum Beispiel ein Hauptsicherungsschalter, können diesbezüglich dicht herangeführt werden. Wenn neben der erläuterten Anordnung kein weiteres Gerät installiert ist und ein Freiraum besteht, bildet die Ausstellung 14 in Kotflügel-Bogenform ergänzend Berührungssicherheit und einen weitergehenden Manipulationsschutz.

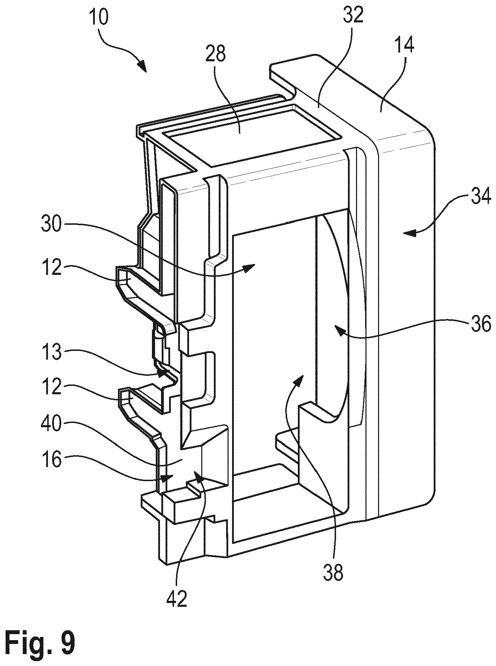

In Figur 9 ist die Manipulationsschutz-Abdeckung 10 für das Überspannungsschutzgerät zur Installation am Sammelschienensystem gemäß einer zweiten Ausführungsform allein gezeigt.

Die Manipulationsschutz-Abdeckung 10 weist wie die zuvor beschriebene Ausführungsform einen Grundkörper 28 auf, der Aufnahmeteilraum 30 für den Schaltbetätigungshebel 7 der vom Überspannungsschutzgerät aufgenommenen elektrischen Komponente definiert, also des Leistungsschutzschalters 6.

An dem Grundkörper 28 ist der seitliche Vorbau 14, auch als Ausstellung bezeichnet, vorgesehen, der über die wenigstens eine Sollbruchstelle 32 mit dem Grundkörper 28 trennbar verbunden ist, wobei die Sollbruchstelle 32 als Perforation 15 ausgebildet sein kann. Alternativ kann die Sollbruchstelle 32 auch als Materialschwächung ausgebildet sein.

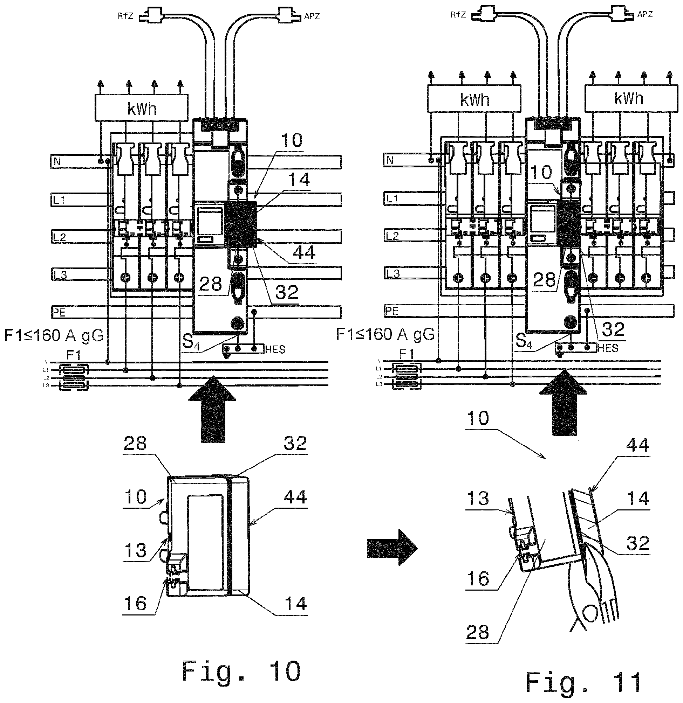

Grundsätzlich lässt sich über die Sollbruchstelle 32 eine definiert veränderliche Breite der Manipulationsschutz-Abdeckung 10 sicherstellen, worauf später mit Bezug auf die Figuren 10 und 11 noch eingegangen wird.

Der seitliche Vorbau 14 bzw. die Ausstellung definiert einen Zusatzraum 34, der über einen Durchgang 36, welcher teilkreisbogenförmig sein kann, mit dem Aufnahmeteilraum 30 verbunden ist, um so den gemeinsamen Aufnahmeraum 38 zu definieren, wie dies auch in den Figuren 2 und 3 gezeigt ist. Der gemeinsame Aufnahmeraum 38 ist entsprechend größer als der durch den Grundkörper 28 definierten Aufnahmeteilraum 30, wie aus den Figuren 2, 3 und 9 deutlich wird.

Zudem ist erkennbar, dass an dem Grundkörper 28 ebenso wie bei der vorherigen Ausführungsform die Schienen 12 vorgesehen sind, über die die Manipulationsschutz-Abdeckung 10 in das Überspannungsschutzgerät eingesetzt werden kann. Die Schienen 12 sind dabei an einer Seite des Grundkörpers 28 angeordnet, die zum seitlichen Vorbau 14 entgegengesetzt ist, also von diesem wegweist.

Ebenfalls weist die Manipulationsschutz-Abdeckung 10 gemäß der zweiten Ausführungsform die Plombierungsfläche 16 auf, an der ein stegartiger Vorsprung 40 vorgesehen ist, welcher eine Öffnung 42 zur Aufnahme einer Plombierung hat.

Wie aus Figur 5 hervorgeht, kann die Plombierungsfläche 16 der Manipulationsschutz-Abdeckung 10 mit einer entsprechenden Plombierungsfläche am Überspannungsschutzgerät zusammenwirken. Insofern kann sichergestellt werden, dass die Manipulationsschutz-Abdeckung 10 nur durch Zerstören der Plombe vom Überspannungsschutzgerät gelöst werden kann.

Darüber hinaus umfasst die Manipulationsschutz-Abdeckung 10 gemäß der zweiten Ausführungsform auch einen Teil der Verrastung 13, über den die Manipulationsschutz-Abdeckung 10 mit dem Überspannungsschutzgerät verrastet werden kann.

Im Gegensatz zur ersten Ausführungsform ist der seitliche Vorbau 14 in der in Figur 9 gezeigten Ausführungsform rechteckig ausgebildet, und nicht bogenförmig.

Aus den Figuren 10 und 11 geht hervor, dass die Manipulationsschutz-Abdeckung 10 grundsätzlich zwei unterschiedliche Zustände aufweisen kann.

In einem ersten Zustand, der in Figur 10 gezeigt ist, schließt der seitliche Vorbau 14 den Aufnahmeraum 38 seitlich ab, da eine Seitenwand 44 seitlich nach außen weist und so den Aufnahmeraum 38 begrenzt. Wie aus Figur 10 deutlich wird, ist die Seitenwand 44 auf der vom Grundkörper 28 abgewandten Seite des seitlichen Vorbaus 14 vorgesehen, da die dem Grundkörper 28 zugewandte Seite des seitlichen Vorbaus 14 den Durchgang 36 aufweist.

Im ersten Zustand ist die Manipulationsschutz-Abdeckung 10 dazu ausgebildet, eine breite elektrische Komponente manipulationssicher aufzunehmen und dennoch den gewünschten Berührungs- bzw. Manipulationsschutz zu gewährleisten. Insbesondere stellt die Seitenwand 44 sicher, dass ein seitlicher Eingriff nicht möglich ist, wenn seitlich neben dem Überspannungsschutzgerät keine weitere Komponente vorgesehen ist, sodass die Seite frei zugänglich ist. Aufgrund der abgeschlossenen Seitenwand 44 ist ein Zugriff aber nicht möglich.

Unter dem seitlichen Vorbau 14 kann ein Universalabdeckstreifen vorgesehen sein, der Teil einer Verteilerabdeckung ist. Insofern entsteht auch rückseitig keine Lücke bzw. kein Spalt, worüber ein Zugriff möglich wäre.

In einem zweiten Zustand ist die Manipulationsschutz-Abdeckung 10 dazu ausgebildet, eine platzsparende Manipulationssicherung bereitzustellen. Im zweiten Zustand ist der seitliche Vorbau 14 über die Sollbruchstelle 32 vom Grundkörper 28 getrennt worden, beispielsweise durch Schneiden oder Brechen.

In dem zweiten Zustand ist der Aufnahmeteilraum 30 im Bereich der Sollbruchstelle 32 seitlich offen, da die Seitenwand 44 mit dem seitlichen Vorbau vom Grundkörper 28 getrennt worden ist. Aus Figur 11 geht jedoch hervor, das in dem zweiten Zustand seitlich neben dem Überspannungsschutzgerät bzw. der Manipulationsschutz-Abdeckung 10 eine weitere Komponente platziert wird, sodass die offene Seite abgedeckt wird. Hierdurch ist der Manipulationsschutz wieder gewährleistet, da ein seitlicher Eingriff nicht möglich ist. Mit anderen Worten entsteht auch im zweiten Zustand (aufgrund der Einbausituation) kein Spalt bzw. keine Lücke.

Der Berührungs- bzw. Manipulationsschutz ist somit in beiden Fällen sichergestellt.

Grundsätzlich ist die Manipulationsschutz-Abdeckung 10 somit flexibel einsetzbar, insbesondere bezüglich der Einbausituation und/oder der Größe der elektrischen Komponente, die vom Überspannungsschutzgerät aufgenommen ist.

Der seitliche Vorbau 14 hat insbesondere eine Breite von einer Teilungseinheit, wie ein Vergleich der Figuren 10 und 11 verdeutlicht.

Hierdurch ergibt sich die definiert veränderliche Breite der Manipulationsschutz-Abdeckung 10, da diese um die Breite des seitlichen Vorbaus 14 definiert verändert werden kann, also beispielsweise eine Teilungseinheit.

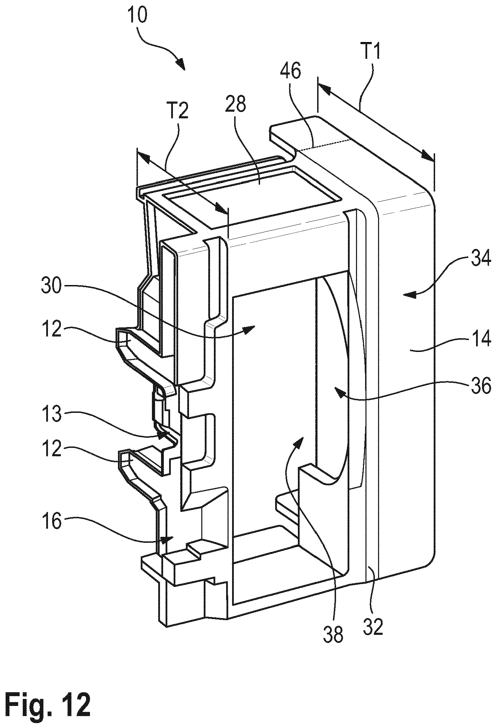

In Figur 12 ist ferner gezeigt, dass der seitliche Vorbau 14 eine Tiefe T1 hat, die im Vergleich zur Tiefe T2 des Grundkörpers 28 verlängert ist. Hierdurch ist sichergestellt, dass auch für den Fall keine Lücke bzw. kein Spalt entsteht, dass eine tiefer konstruierte Verteilerabdeckung vorgesehen ist.

Es ist ferner gezeigt, dass der seitliche Vorbau 14 eine Sollbruchstelle 46 aufweist, die quer verlaufend ist, also senkrecht zur Sollbruchstelle 32 ist. Hierüber kann die Tiefe des seitlichen Vorbaus 14 definiert verändert werden.

## Patentansprüche

1. Manipulationsschutz-Abdeckung eines Überspannungsschutzgeräts zur Installation an einem Sammelschienensystem, wobei die Manipulationsschutz-Abdeckung (10) einen Grundkörper (28) aufweist, der einen Aufnahmeteilraum (30) für einen Schaltbetätigungshebel (7) einer vom Überspannungsschutzgerät aufgenommenen elektrischen Komponente (6) definiert, wobei die Manipulationsschutz-Abdeckung (10) einen seitlichen Vorbau (14) aufweist, der über wenigstens eine Sollbruchstelle (32) mit dem Grundkörper (28) trennbar verbunden ist, und wobei der seitliche Vorbau (14) einen Zusatzraum (34) definiert, der zusammen mit dem Aufnahmeteilraum (30) des Grundkörpers (28) einen gemeinsamen Aufnahmeraum (38) für den Schaltbetätigungshebel (7) definiert, der größer ist als der durch den Grundkörper (28) definierte Aufnahmeteilraum (30).

2. Manipulationsschutz-Abdeckung nach Anspruch 1, **dadurch gekennzeichnet, dass** die Manipulationsschutz-Abdeckung (10) einen ersten Zustand, in dem der seitliche Vorbau (14) den Aufnahmeraum (38) seitlich abschließt, und einen zweiten Zustand aufweist, in dem der Aufnahmeteilraum (30) im Bereich der Sollbruchstelle (32) seitlich offen ist.

3. Manipulationsschutz-Abdeckung nach Anspruch 1 oder 2, **dadurch gekennzeichnet, dass** der seitliche Vorbau (14) eine Seitenwand (44) aufweist, die auf der vom Grundkörper (28) abgewandten Seite des seitlichen Vorbaus (14) vorgesehen ist.

4. Manipulationsschutz-Abdeckung nach einem der vorhergehenden Ansprüche, **dadurch gekennzeichnet, dass** die wenigstens eine Sollbruchstelle (32) eine definiert veränderliche Breite der Manipulationsschutz-Abdeckung (10) sicherstellt.

5. Manipulationsschutz-Abdeckung nach einem der vorhergehenden Ansprüche, **dadurch gekennzeichnet, dass** der seitliche Vorbau (14) eine Breite von 1 Teilungseinheit (TE) hat.

6. Manipulationsschutz-Abdeckung nach einem der vorhergehenden Ansprüche, **dadurch gekennzeichnet, dass** der seitliche Vorbau (14) eine rechteckige Form hat.

7. Manipulationsschutz-Abdeckung nach einem der vorhergehenden Ansprüche, **dadurch gekennzeichnet, dass** der seitliche Vorbau (14) eine Tiefe hat, die im Vergleich zur Tiefe des Grundkörpers (28) verlängert ist.

8. Manipulationsschutz-Abdeckung nach einem der vorhergehenden Ansprüche, **dadurch gekennzeichnet, dass** die Manipulationsschutz-Abdeckung (10), insbesondere der Grundkörper (28), wenigstens eine Schiene (12) aufweist, über die die Manipulationsschutz-Abdeckung (10) am Überspannungsschutzgerät einsetzbar ist, insbesondere wobei die Schiene (12) an einer zum seitlichen Vorbau (14) entgegengesetzten Seite des Grundkörpers (28) vorgesehen ist.

9. Manipulationsschutz-Abdeckung nach einem der vorhergehenden Ansprüche, **dadurch gekennzeichnet, dass** die Manipulationsschutz-Abdeckung (10) zumindest einen Teil einer Verrastung (13) aufweist, insbesondere eine Rastnase oder einen Rastrücksprung.

10. Manipulationsschutz-Abdeckung nach einem der vorhergehenden Ansprüche, **dadurch gekennzeichnet, dass** die Manipulationsschutz-Abdeckung (10) eine Plombierungsfläche (16) aufweist.

11. Manipulationsschutz-Abdeckung nach Anspruch 10, **dadurch gekennzeichnet, dass** an der Plombierungsfläche (16) ein stegartiger Vorsprung (40) vorgesehen ist, welcher eine Öffnung (42) zur Aufnahme einer Plombierung aufweist.

12. Manipulationsschutz-Abdeckung nach einem der vorhergehenden Ansprüche, **dadurch gekennzeichnet, dass** die Manipulationsschutz-Abdeckung (10) aus einem transparenten Material hergestellt ist, insbesondere einem transparentem Kunststoffmaterial.

13. Baugruppe umfassend ein Überspannungsschutzgerät sowie eine Manipulationsschutz-Abdeckung (10) nach einem der vorhergehenden Ansprüche.

14. Baugruppe nach Anspruch 13, **dadurch gekennzeichnet, dass** das Überspannungsschutzgerät ein Gehäuse (2) mit einem Gehäuserücksprung (4) aufweist, welcher an einer Gehäuselängsseite (5) ausgebildet ist und sich im Wesentlichen senkrecht zum Sammelschienensystem sowie im Bereich eines Gehäusedomes (8) erstreckt, wobei die Manipulationsschutz-Abdeckung (10) dem Gehäuserücksprung (4) zugeordnet ist.

15. Baugruppe nach Anspruch 13 oder 14, **dadurch gekennzeichnet, dass** zwischen dem Gehäusedom (8) und der Manipulationsschutz-Abdeckung (10) eine Verrastung (13) realisiert ist.

## Claims

1. A tamper protection cover of a surge protection device for installation on a busbar system, wherein the tamper protection cover (10) includes a base body (28) defining a receiving partial space (30) for a switching operation lever (7) of an electrical component (6) received by the surge protection device, wherein the tamper protection cover (10) includes a lateral extension (14) which is separably connected to the base body (28) by means of at least one predetermined breaking point (32), and wherein the lateral extension (14) defines an additional space (34) which, together with the receiving partial space (30) of the base body (28), defines a common receiving space (38) for the switching operation lever (7) that is larger than the receiving partial space (30) defined by the base body (28).

2. The tamper protection cover according to claim 1, **characterized in that** the tamper protection cover (10) has a first state, in which the lateral extension (14) laterally closes off the receiving space (38), and a second state, in which the receiving partial space (30) is laterally open in the area of the predetermined breaking point (32).

3. The tamper protection cover according to claim 1 or 2, **characterized in that** the lateral extension (14) includes a side wall (44) provided on the side of the lateral extension (14) facing away from the base body (28).

4. The tamper protection cover according to any of the preceding claims, **characterized in that** the at least one predetermined breaking point (32) ensures a width of the tamper protection cover (10) that is variable in a defined manner.

5. The tamper protection cover according to any of the preceding claims, **characterized in that** the lateral extension (14) has a width of 1 module (TE).

6. The tamper protection cover according to any of the preceding claims, **characterized in that** the lateral extension (14) has a rectangular shape.

7. The tamper protection cover according to any of the preceding claims, **characterized in that** the lateral extension (14) has a depth that is extended as compared to the depth of the base body (28).

8. The tamper protection cover according to any of the preceding claims, **characterized in that** the tamper protection cover (10), in particular the base body (28), includes at least one rail (12) by means of which the tamper protection cover (10) can be inserted on the surge protection device, in particular wherein the rail (12) is provided on a side of the base body (28) opposite the lateral extension (14).

9. The tamper protection cover according to any of the preceding claims, **characterized in that** the tamper protection cover (10) includes at least part of a latch mechanism (13), in particular a latching lug or a latching recess.

10. The tamper protection cover according to any of the preceding claims, **characterized in that** the tamper protection cover (10) includes a sealing surface (16).

11. The tamper protection cover according to claim 10, **characterized in that** the sealing surface (16) has a web-like projection (40) provided thereon, which has an opening (42) for receiving a sealing.

12. The tamper protection cover according to any of the preceding claims, **characterized in that** the tamper protection cover (10) is made from a transparent material, in particular a transparent plastic material.

13. An assembly comprising a surge protection device and a tamper protection cover (10) according to any of the preceding claims.

14. The assembly according to claim 13, **characterized in that** the surge protection device includes a housing (2) having a housing recess (4) which is formed on a housing longitudinal side (5) and extends substantially perpendicularly to the busbar system and in the region of a housing dome (8), the tamper protection cover (10) being associated with the housing recess (4).

15. The assembly according to claim 13 or 14, **characterized in that** a latch mechanism (13) is implemented between the housing dome (8) and the tamper protection cover (10).

## Revendications

1. Recouvrement de protection contre les manipulations d'un appareil parasurtenseur pour l'installation sur un système de barres collectrices, le recouvrement de protection contre les manipulations (10) présentant un corps de base (28) qui définit un espace partiel de réception (30) pour un levier d'actionnement de commutation (7) d'un composant électrique (6) reçu par l'appareil parasurtenseur, le recouvrement de protection contre les manipulations (10) présentant un avant-corps latéral (14) qui est relié de manière détachable au corps de base (28) par au moins un point de rupture déterminé (32), et l'avant-corps latéral (14) définissant un espace supplémentaire (34) qui définit, ensemble avec l'espace partiel de réception (30) du corps de base (28), un espace de réception commun (38) pour le levier d'actionnement de commutation (7) qui est plus grand que l'espace partiel de réception (30) défini par le corps de base (28).

2. Recouvrement de protection contre les manipulations selon la revendication 1, **caractérisé en ce que** le recouvrement de protection contre les manipulations (10) présentant un premier état dans lequel l'avant-corps latéral (14) ferme l'espace de réception (38) latéralement, ainsi qu'un deuxième état dans lequel l'espace partiel de réception (30) est ouvert latéralement dans la zone du point de rupture déterminé (32).

3. Recouvrement de protection contre les manipulations selon la revendication 1 ou 2, **caractérisé en ce que** l'avant-corps latéral (14) présente une paroi latérale (44) qui est prévue du côté de l'avant-corps latéral (14) qui est détourné du corps de base (28).

4. Recouvrement de protection contre les manipulations selon l'une des revendications précédentes, **caractérisé en ce que** ledit au moins un point de rupture déterminé (32) assure une largeur variable de manière définie du recouvrement de protection contre les manipulations (10).

5. Recouvrement de protection contre les manipulations selon l'une des revendications précédentes, **caractérisé en ce que** l'avant-corps latéral (14) a une largeur de 1 horizontal pitch (TE).

6. Recouvrement de protection contre les manipulations selon l'une des revendications précédentes, **caractérisé en ce que** l'avant-corps latéral (14) a une forme rectangulaire.

7. Recouvrement de protection contre les manipulations selon l'une des revendications précédentes, **caractérisé en ce que** l'avant-corps latéral (14) a une profondeur qui est prolongée par rapport à la profondeur du corps de base (28).

8. Recouvrement de protection contre les manipulations selon l'une des revendications précédentes, **caractérisé en ce que** le recouvrement de protection contre les manipulations (10), en particulier le corps de base (28), présente au moins un rail (12) au moyen duquel le recouvrement de protection contre les manipulations (10) peut être inséré sur l'appareil parasurtenseur, le rail (12) étant en particulier prévu du côté du corps de base (28) qui est opposé à l'avant-corps latéral (14).

9. Recouvrement de protection contre les manipulations selon l'une des revendications précédentes, **caractérisé en ce que** le recouvrement de protection contre les manipulations (10) présente au moins une partie d'un moyen d'enclenchement (13), en particulier un nez d'enclenchement ou un retrait d'enclenchement.

10. Recouvrement de protection contre les manipulations selon l'une des revendications précédentes, **caractérisé en ce que** le recouvrement de protection contre les manipulations (10) présente une surface de plombage (16).

11. Recouvrement de protection contre les manipulations selon la revendication 10, **caractérisé en ce qu'**une saillie (40) en forme de barrette qui présente une ouverture (42) pour la réception d'un plombage est prévue sur la surface de plombage (16).

12. Recouvrement de protection contre les manipulations selon l'une des revendications précédentes, **caractérisé en ce que** le recouvrement de protection contre les manipulations (10) est réalisé en une matière transparente, en particulier une matière plastique transparente.

13. Ensemble comprenant un appareil parasurtenseur ainsi qu'un recouvrement de protection contre les manipulations (10) selon l'une des revendications précédentes.

14. Ensemble selon la revendication 13, **caractérisé en ce que** l'appareil parasurtenseur présente un boîtier (2) qui comprend un retrait de boîtier (4) qui est réalisé d'un grand côté (5) du boîtier et qui s'étend sensiblement perpendiculairement au système de barres collectrices et dans la zone d'un dôme de boîtier (8), le recouvrement de protection contre les manipulations (10) étant associé au retrait de boîtier (4).

15. Ensemble selon la revendication 13 ou 14, **caractérisé en ce qu'**un moyen d'enclenchement (13) est réalisé entre le dôme de boîtier (8) et le recouvrement de protection contre les manipulations (10).
